# EUROPÄISCHE PATENTANMELDUNG

(11) **EP 1 535 774 A1**
(43) Veröffentlichungstag der Anmeldung: **01.06.2005**
(21) Anmeldenummer: 04026643.9
(22) Anmeldetag: 10.11.2004
(51) Int. Cl.: B60H 1/32

(54) **Kraftfahrzeug-Klimaanlage mit Standklimatisierung**

(30) Priorität: 25.11.2003 DE 10355397
(71) Anmelder: Behr GmbH & Co. KG, 70469 Stuttgart (DE)
(72) Erfinder: Heinle, Dieter, 73655 Plüdershausen (DE)
(74) Vertreter: Grauel, Andreas, Dr.

(57) **Zusammenfassung**

Die Erfindung betrifft eine Kraftfahrzeug-Klimaanlage (1) mit Standklimatisierung für einen Betrieb der Kraftfahrzeug-Klimaanlage (1) im Falle eines Kraftfahrzeug-Motor-Stillstands mit einer Hilfsenergieversorgung (5), wobei ein Generator (7) vorgesehen ist, welcher im Stillstand des Kraftfahrzeugmotors mittels der Hilfsenergieversorgung (5) betreibbar ist und bei einer externen Energieversorgung (9) als Elektromotor (7') betreibbar ist, sowie ein Verfahren zum Betreiben einer derartigen Kraftfahrzeug-Klimaanlage (1).

## Beschreibung

Die Erfindung betrifft eine Kraftfahrzeug-Klimaanlage mit Standklimatisierung gemäß dem Oberbegriff des Anspruchs 1.

Bekannt sind Klimaanlagen mit Standklimatisierung, die als Hilfsantrieb einen kleinen Dieselmotor aufweisen. Diese sind jedoch relativ laut und schwer.

Ferner ist die Verwendung von elektrischen Kompressoren bekannt. Diese sind jedoch teuer und meist für den Einsatz in Lastwagen auf Grund der Lebensdauer nicht geeignet. So beschränkt sich die Standklimatisierung heute auf einen reinen Heizbetrieb unter Verwendung einer Standheizung mit begrenzter Laufzeit, da die Batterie für einen Dauerbetrieb nicht geeignet ist.

Es ist Aufgabe der Erfindung, eine verbesserte Klimaanlage mit Standklimatisierung zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage mit Standklimatisierung für einen Betrieb der Kraftfahrzeug-Klimaanlage im Falle eines Kraftfahrzeug-Motor-Stillstands mit einer Hilfsenergieversorgung vorgesehen, wobei ein Generator vorgesehen ist, welcher im Stillstand des Kraftfahrzeugmotors mittels der Hilfsenergieversorgung betreibbar ist und bei einer externen Energieversorgung als Elektromotor betreibbar ist. Dabei treibt bei externer Energieversorgung der Elektromotor den hiermit gekoppelten, mechanischen Kompressor an. In diesem Betrieb ist die Hilfsenergieversorgung funktionslos, die Nebenaggregate, wie beispielsweise der Lüfter, werden direkt über die externe Energieversorgung betrieben, wobei ein Spannungskonverter verwendet wird.

Der Kompressor wird im Falle einer Energieversorgung mittels der Hilfsenergieversorgung durch diese angetrieben. Auf Grund eines Spannungskonverters, der möglichst direkt nach der Einleitung der externen Energie vorgesehen ist, wird die hohe Wechselspannung in die niedrigere Bordspannung konvertiert, so dass Gefahrenquellen reduziert werden.

Bevorzugt ist der Antrieb des Kompressors mit dem Abtrieb des Elektromotors verbindbar, wobei vorzugsweise die in diesem Fall inaktive Hilfsenergieversorgung dazwischen angeordnet ist.

Im Folgenden wird die Erfindung anhand eines Ausführungsbeispiels mit Abwandlungen unter Bezugnahme auf die Zeichnung im Einzelnen erläutert. In der Zeichnung zeigen:
- Fig. 1: eine schematisch teilweise dargestellte Klimaanlage im Standbetrieb, wobei eine APU einen Kompressor antreibt, und
- Fig. 2: eine Fig. 1 entsprechende Darstellung, wobei die APU inaktiv ist und der Antrieb der Standklimatisierung über einen Elektromotor, angetrieben durch eine externe Energieversorgung, erfolgt.

Die Figuren zeigen eine Kraftfahrzeug-Klimaanlage 1, von der in der Zeichnung nur der mechanische Kompressor 2 dargestellt ist. Der Kompressor 2 ist in Hinblick auf seine Energieversorgung über eine Antriebswelle 3 und eine Kupplung 4 mit einer Hilfsenergieversorgung, im Folgenden als APU 5 (auxiliary power unit) bezeichnet, verbunden. Die APU 5 ihrerseits ist über eine weitere Welle 6 mit einem Generator 7 verbunden, der auch als Elektromotor 7' betreibbar ist.

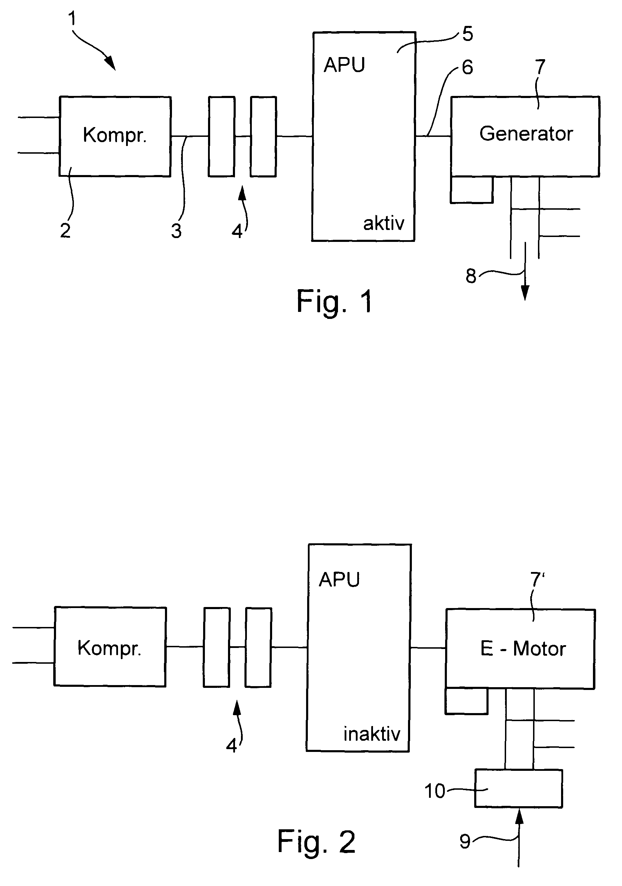

Die APU 5 dient hierbei als Notenergieversorgung, welche bei einem Stillstand des Kraftfahrzeugmotors (nicht dargestellt) den Antrieb des Kompressors 2 übernimmt, so dass die Klimaanlage 1 weiter betrieben werden kann (Standklimatisierung). Wird keine Energie vom Kompressor 2 benötigt, so wird die überschüssige Energie der APU 5 über die Welle 6 dem Generator 7 zugeführt, welcher gemäß dem vorliegenden Ausführungsbeispiel als 12 V-Spannungsquelle 8 fungiert und beispielsweise eine Batterie auflädt, welche die Energie speichert (siehe Fig. 1). Alternativ kann die überschüssige Energie beispielsweise der Lichterzeugung oder der Heizung dienen.

Ist eine externe Energieversorgung 9 ("ground power supply"), vorliegend eine 230 V Wechselstromquelle, vorgesehen, wie in Fig. 2 dargestellt, so wird die elektrische Leistung über einen Spannungskonverter 10 dem nunmehr als Elektromotor 7' wirkenden Generator 7 zugeführt. Dieser treibt bei Bedarf über die in diesem Fall inaktive APU 5 den Kompressor 2 der Klimaanlage 1 an, so dass wiederum deren Kühlfunktion im Stillstand gesichert ist. Die Nebenaggregate, wie beispielsweise der Lüfter, werden direkt über die externe Energieversorgung betrieben, wobei der Spannungskonverter 10 zur Anpassung der Spannung und zur Umwandlung von Wechselstrom in Gleichstrom verwendet wird. Die von der externen Energieversorgung 9 zugeführte, umgewandelte Energie kann auch zum Heizen verwendet werden.

Gemäß einer alternativen Ausführungsform ist anstelle der Kupplung 4 ein Riemengetriebe vorgesehen, wodurch sich andere Übersetzungen ergeben. Andere Koppelungen sind ebenfalls möglich.

### Bezugszeichenliste

- 1: Klimaanlage
- 2: Kompressor
- 3: Antriebswelle
- 4: Kupplung
- 5: APU
- 6: Welle
- 7: Generator 7
- 7': Elektro-
- 8: 12V-Spannungsquelle
- 9: externe Energieversorgung
- 10: Spannungskonverter

## Patentansprüche

1. Kraftfahrzeug-Klimaanlage mit Standklimatisierung für einen Betrieb der Kraftfahrzeug-Klimaanlage (1) im Falle eines Kraftfahrzeug-Motor-Stillstands mit einer Hilfsenergieversorgung (5), **dadurch gekennzeichnet, dass** ein Generator (7) vorgesehen ist, welcher im Stillstand des Kraftfahrzeugmotors mittels der Hilfsenergieversorgung (5) betreibbar ist und bei einer externen Energieversorgung (9) als Elektromotor (7') betreibbar ist.

2. Kraftfahrzeug-Klimaanlage nach Anspruch 1, **dadurch gekennzeichnet, dass** durch den von der externen Energieversorgung (9) antreibbaren Elektromotor (7') und/oder die Hilfsenergieversorgung (5) ein mechanischer Kompressor (2), welcher Teil der Klimaanlage (1) ist, antreibbar ist.

3. Kraftfahrzeug-Klimaanlage nach Anspruch 2, **dadurch gekennzeichnet, dass** der Antrieb des Kompressors (2) mit dem Abtrieb des Elektromotors (7') verbindbar ist.

4. Kraftfahrzeug-Klimaanlage nach Anspruch 2 oder 3, **dadurch gekennzeichnet, dass** zwischen dem Antrieb des Kompressors (2) und dem Abtrieb des Elektromotors (7') die Hilfsenergieversorgung (5) angeordnet ist.

5. Kraftfahrzeug-Klimaanlage nach einem der vorhergehenden Ansprüche, **dadurch gekennzeichnet, dass** die Hilfsenergieversorgung (5) bei externer Energieversorgung (9) inaktiv ist.

6. Kraftfahrzeug-Klimaanlage nach einem der vorhergehenden Ansprüche, **dadurch gekennzeichnet, dass** ein Spannungskonverter (10) für die externe Energieversorgung (9) vorgesehen ist.

7. Verfahren zum Betreiben einer Kraftfahrzeug-Klimaanlage (1) gemäß einem der Ansprüche 1 bis 6, wobei die Standklimatisierung bei einem Betrieb der Kraftfahrzeug-Klimaanlage (1) im Falle eines Kraftfahrzeug-Motor-Stillstands entweder mit einer Hilfsenergieversorgung (5) oder mit einer externen Energieversorgung (9) betrieben wird.

8. Verfahren nach Anspruch 7, **dadurch gekennzeichnet, dass** bei Standklimatisierung, insbesondere Kühlung, mit externer Energieversorgung (9) die Spannung mittels eines Spannungskonverters (10) umgewandelt wird.

9. Verfahren nach Anspruch 7 oder 8, **dadurch gekennzeichnet**, ein mechanischer Kompressor (2) im Bedarfsfall von der Hilfsenergieversorgung (5) oder, bei externer Energieversorgung (9), nach einer Spannungskonvertierung durch einen Spannungskonverter (10) durch den als Elektromotor (7') wirkenden Generator (7) betrieben wird, wobei die Hilfsenergieversorgung (5) inaktiv ist.
